# EUROPÄISCHE PATENTSCHRIFT

(11) **EP 4 674 603 B1**
(45) Veröffentlichungstag und Bekanntmachung des Hinweises auf die Patenterteilung: **05.08.2026**
(21) Anmeldenummer: 24186624.3
(22) Anmeldetag: 04.07.2024
(51) Int. Cl.: B29C 65/48, B29C 65/00, F16B 11/00, F16L 3/10

(54) **VORRICHTUNG ZUR FIXIERUNG EINER BEFESTIGUNGSPLATTE, BEFESTIGUNGSSET UND VERFAHREN**
DEVICE FOR FIXING A FIXING PLATE, FASTENING SET AND METHOD
DISPOSITIF DE FIXATION D'UNE PLAQUE DE FIXATION, KIT DE FIXATION ET PROCÉDÉ

(43) Veröffentlichungstag der Anmeldung: 07.01.2026
(73) Patentinhaber: WALTER STAUFFENBERG GMBH & CO. KG, 58791 Werdohl (DE)
(72) Erfinder:
(74) Vertreter: Patentanwälte Dörner & Kötter PartG mbB

(56) Entgegenhaltungen:
- WO-A1-2010/144281
- CN-A- 113 677 916
- DE-A1- 102022 108 233
- DE-C2- 19 649 635
- US-A- 4 390 576

## Beschreibung

Die Erfindung betrifft eine Vorrichtung zur Fixierung einer Befestigungsplatte für Rohrschellen für die klebende Befestigung auf einer Unterlage nach dem Patentanspruch 1. Dier Erfindung betrifft weiterhin ein Befestigungsset mit einer solchen Vorrichtung nach dem Patentanspruch 9 sowie ein Verfahren zur klebenden Befestigung einer Befestigungsplatte mit einer solchen Vorrichtung nach dem Patentanspruch 11.

Zur Befestigung von Schellen für Kabel und Leitungen, insbesondere von Schellen gemäß den Normen DIN 3015-1:1999-01, DIN 3015-2:1999-01 und DIN 3015-3:1999-01 sind Befestigungsplatten bekannt, die auf einer Seite mit zwei zueinander beabstandet angeordneten Innengewindesockeln versehen sind. Die Innengewindesockel dienen der Aufnahme von Befestigungsschrauben, die zur Befestigung einer Schelle an der Befestigungsplatte durch hierzu in den Schellen vorhandene Durchführungen geführt und in die Innengewindesockel eingeschraubt werden. Derartige Befestigungsplatten für Rohrschellen werden neben den üblichen Schweißplatten oder Anschraubplatten unter der Bezeichnung "Stauff Bond Klebeplatten" vertrieben. Diese Befestigungsplatten werden auf die Unterlage, geklebt und nicht wie allgemein üblich verschweißt und verschraubt. Hierdurch ist die Befestigungsplatte insbesondere auch bei industriellen Oberflächen in Bereichen einsetzbar, in denen aus sicherheitsrelevanten oder dekorativen Gründen nicht geschweißt werden darf.

Es ist bekannt, derartige Befestigungsplatten an Ihrer der Unterlage zugewandten Unterseite mit einer Fixierhilfe zu versehen, wie sie in der WO 2010/144281 A1 oder auch der US 4 390 576 A beschrieben ist. Diese Fixierhilfe wird in der Befestigungsplatte eingesetzt und weist einem mit einem Klebepad versehenen Fixierknopf auf, der bei Andrücken der Befestigungsplatte an einen Untergrund in einen Innenraum der Fixierhilfe bewegt, wo er über einen Übertotpunkt-Mechanismus in Position gehalten wird. In dieser Position ist ein definierter Abstand der Befestigungsplatte zu der Unterlage gewährleistet, wodurch auf die Befestigungsplatte aufgetragene Klebemasse verdrängt wird. Ergebnis ist eine Klebeschicht definierte Dicke. Die Befestigungsplatte wird über die Fixierhilfe in ihrer Position gehalten, sodass der Kleber ohne Veränderung der Position der Befestigungsplatte aushärten kann.

Nachteilig an der vorbekannten Fixierhilfe ist, dass diese in jede Befestigungsplatte in einem aufwändigen Fertigungsprozess eingebracht werden muss. Zudem verbleibt die Fixierhilfe dauerhaft in der Befestigungsplatte, weshalb sie nicht wiederverwendet werden kann. Ein weiterer Nachteil ist, dass der Fixierknopf der Fixierhilfe aufgrund der eingeschränkten Platzprobleme auf der rückwärtigen Plattenseite nur ein vergleichsweise kleines Klebepad aufweist, das daher nur geringe Fixierkräfte hervorbringt. Eine Vergrößerung der Fixierhilfe würde jedoch zu einer Reduzierung der Klebefläche der Befestigungsplatte und damit auch zu einer Reduzierung der erreichbaren, finalen Klebekraft führen.

Hier setzt die vorliegende Erfindung an. Der Erfindung liegt die Aufgabe zugrunde, eine Vorrichtung zur Fixierung einer Befestigungsplatte für Rohrschellen für die klebende Befestigung auf einer Unterlage bereitzustellen, die eine maximale Klebefläche ermöglicht und die zudem wiederverwendbar ist. Gemäß der Erfindung wird diese Aufgabe durch eine Vorrichtung mit den Merkmalen des Patentanspruchs 1 gelöst.

Mit der Erfindung ist eine Vorrichtung zur Fixierung einer Befestigungsplatte für Rohrschellen für die klebende Befestigung auf einer Unterlage geschaffen, die eine maximale Klebefläche ermöglicht und die zudem wiederverwendbar ist. Dadurch, dass die Vorrichtung eine Haltebrücke umfasst, die einen Haltesteg aufweist, der mit zwei beabstandet zueinander angeordneten Säulenteilen versehen ist, die in einer Richtung in einem gleichen Abstand über den Haltesteg hervorragen, wobei die Säulenteile an ihrem über den Haltesteg hervorragenden Ende mit einem Fixiermittel zur Befestigung an der Unterlage versehen sind, ist eine Positionierung der Fixierflächen der Vorrichtung außerhalb der Befestigungsplatte erzielt, wodurch eine maximale Klebefläche der Befestigungsplatte bewirkt ist. Weiterhin ist hierdurch eine Entfernung der Vorrichtung nach dem Aushärten des Klebers ermöglicht, wodurch eine Wiederverwendbarkeit der Vorrichtung gewährleistet ist. Durch die Höhe der Säulenteile ist ein definierter Klebespalt zwischen Befestigungsplatte und Unterlage gewährleistet, wodurch die Qualität der Klebeverbindung erhöht ist.

In einer Ausgestaltung der Erfindung ist das Fixiermittel durch ein Klebepad gebildet. Hierdurch ist eine einfache Befestigung der Vorrichtung an der Unterlage ermöglicht. Bevorzugt sind die Klebepads derart ausgebildet, dass sie nach dem Einsatz der Vorrichtung rückstandsfrei lösbar sind. Vorteilhaft sind die Klebepads mit einem wiederablösbaren doppelseitigen Klebeband, beispielsweise einem Acrylat-Klebeband aus geschlossenzelligem Schaumstoff versehen.

In einer weiteren Ausgestaltung der Erfindung ist das Fixiermittel durch einen Magneten gebildet. Hierdurch ist eine einfach lösbare Befestigung an einer ferromagnetischen Unterlage ermöglicht.

In weiterer Ausgestaltung der Erfindung weisen die Säulen jeweils eine Aufnahme für einen Fixiereinsatz auf, in die ein Fixiereinsatz eingebracht ist, der mit dem jeweiligen Säulenteil lösbar verbunden ist und der das Fixiermittel aufweist. Hierdurch ist je nach Beschaffenheit der Unterlage ein Fixiereinsatz mit einem geeigneten Fixiermittel einsetzbar.

In Weiterbildung der Erfindung ist die Aufnahme zumindest bereichsweise ferromagnetisch ausgebildet, wobei der Fixiereinsatz einen magnetischen Abschnitt aufweist, über den er in der Aufnahme magnetisch gehalten ist.

In Ausgestaltung der Erfindung weist die Aufnahme eine Bohrung oder eine Gewindebohrung auf, wobei der Fixiereinsatz einen Klemmstift bzw. einen Gewindestift aufweist, über den er in der Rastbohrung bzw. der Gewindebohrung lösbar befestigt ist.

Gemäß der Erfindung weist der Haltesteg an seiner den hervorragenden Enden der Säulenteile zugewandten Unterseite ein Haltestück zur Aufnahme wenigstens eines an der Befestigungsplatte angeordneten Innengewindesockels auf. Hierdurch ist eine verbesserte Fixierung der Befestigungsplatte über den Haltesteg bewirkt. Hierbei ist das Haltestück zur Aufnahme von zwei beabstandet auf der Befestigungsplatte angeordneten Innengewindesockeln ausgebildet. Dabei weist das Haltestück zwei gegenüberliegende, entgegengerichtet gewölbte Anlagenflächen zur Anlage jeweils eines Innengewindesockels der Befestigungsplatte auf.

In Weiterbildung der Erfindung ist das Haltestück zur Aufnahme des wenigstens einen Innengewindesockels lösbar mit dem Haltesteg verbunden. Hierdurch ist der Haltesteg je nach Ausgestaltung der Befestigungsplatte mit unterschiedlichen Haltestücken bestückbar. Beispielsweise können Haltestücke für unterschiedliche Größen von Befestigungsplatten mit unterschiedlichen Abständen der Innengewindesockel ausgebildet sein.

Gegenstand der vorliegenden Erfindung ist weiterhin ein Befestigungsset mit einer solchen Vorrichtung nach dem Patentanspruch 9. Das Befestigungsset umfasst weiterhin eine Befestigungsplatte und einen Kleber, wobei die Befestigungsplatte auf Ihrer der Unterlage abgewandten Oberseite zwei beabstandet zueinander angeordnete Innengewindesockel aufweist und wobei die Vorrichtung ein Haltestück zur Aufnahme der beiden Innengewindesockel der Befestigungsplatte aufweist.

In einer möglichen Ausgestaltung der Erfindung ist der Kleber mit kugelförmigen Partikeln versetzt. Durch die im Kleber vorhandenen kugelförmigen Partikel ist ein ausreichend dimensionierter Klebespalt gewährleistet, wodurch die Qualität der Klebeverbindung erhöht ist.

In einer weiteren Ausgestaltung der Erfindung ist wenigstens eines der Säulenteile mit einer Justierhilfe versehen, die mit einer an der Befestigungsplatte angeordneten Justierhilfe korrespondiert, wobei die Justierhilfen vorzugsweise in Form einer Linie oder eines Pfeils ausgebildet sind. Bevorzugt sind beide Säulenteile mit einer Justierhilfe versehen, wobei die Befestigungsplatte besonders bevorzugt an ihren beiden jeweils einem Säulenteil zugewandten Seiten eine Justierhilfe aufweisen.

Gegenstand der Erfindung ist drüber hinaus ein Verfahren zur klebenden Befestigung einer Befestigungsplatte für Rohrschellen auf einer Unterlage mit einer solchen Vorrichtung nach dem Patentanspruch 11. Dadurch dass die Befestigungsplatte auf ihrer auf der Unterlage aufzuklebenden Unterseite mit einem Kleber, vorzugsweise einem Zwei-Komponenten-Kleber versehen wird, nachfolgend die Befestigungsplatte auf die Unterlage aufgebracht wird und sodann die Vorrichtung derart mit ihren Säulenteilen auf der Unterlage befestigt wird, dass der Haltesteg über der Oberseite der Befestigungsplatte verläuft, wodurch diese gegen die Unterlage gedrückt wird, ist eine zuverlässige Fixierung der Befestigungsplatte in ihrer Position gewährleistet. Durch die Positionierung des Haltesteges über die Höhe der Säulenteile der Vorrichtung ist ein definierter Klebespalt gewährleistet. Überschüssiger Kleber wird nach außen verdrängt und kann dort einfach entfernt werden.

Vorteilhaft weist die Befestigungsplatte auf ihrer Oberseite zwei beabstandet zueinander angeordnete Innengewindesockel auf und der Haltesteg weist ein Haltestück zur Aufnahme der beiden Gewindesockel der Befestigungsplatte auf, wobei das Haltestück zwischen den beiden Gewindesockeln der Befestigungsplatte positioniert wird und mit jeweils wenigstens einer Anlagefläche an den beiden Gewindesockeln anliegt. Hierdurch ist eine Fixierung der Position der Befestigungsplatte in Längs- und Querrichtung erzielt.

Andere Weiterbildungen und Ausgestaltungen der Erfindung sind in den übrigen Unteransprüchen angegeben. Ein Ausführungsbeispiel der Erfindung ist in den Zeichnungen dargestellt und wird nachfolgend im Einzelnen beschrieben. Es zeigen:
- Fig. 1: die schematische Darstellung einer Haltebrücke mit aufgenommener Befestigungsplatte für Rohrschellen;
- Fig. 2: die schematische Darstellung der Befestigungsplatte der Anordnung aus Figur 1;
- Fig. 3: die schematische Darstellung der Haltebrücke aus Figur 1 mit angeordneten Fixiereinsatz in Form eines Magneteinsatzes;
- Fig. 4: die schematische Darstellung der Haltebrücke aus Figur 3 mit angeordneten Fixiereinsatz in Form eines Klebepad-Einsatzes und
- Fig. 5: Die Darrstellung einer auf einer Unterlage geklebten Befestigungsplatte mit zur Befestigung mittels Schrauben angeordneter Rohrschelle.

Die als Ausführungsbeispiel gewählte Vorrichtung zur Fixierung einer Befestigungsplatte 6 für Rohrschellen 8 für die klebende Befestigung auf einer Unterlage 7 umfasst eine Haltebrücke 1, mit einem Haltesteg 2, der an seinen beiden Enden mit jeweils einem Säulenteil 3 verbunden ist, das jeweils einen Fixiereinsatz 4 aufnimmt. Mittig ist an dem Haltesteg 2 ein Haltestück 5 lösbar befestigt.

Der Haltesteg 2 ist im Wesentlichen quaderförmig ausgebildet. An seinen beiden Enden ist jeweils ein Säulenteil 3 derart angeformt, dass die der Unterlage 7 abgewandten Oberseiten des Haltesteges 2 und der gegenüberliegend angeordneten Säulenteile 3 auf einer gemeinsamen Ebene liegen. Die Säulenteile 3 sind identisch ausgebildet und überragen die Unterseite des Haltesteges 2 in einer definierten Länge.

Die Säulenteile 3 sind im Wesentlichen zylinderförmig ausgebildet und weisen an ihrer dem Haltesteg 2 abgewandten Unterseite eine Aufnahme für einen Fixiereinsatz 4 auf. Im Ausführungsbeispiel ist die Aufnahme in Form einer - nicht dargestellten - zylindrischen Einsenkung ausgeführt, durch die ein hohlzylindrischer Abschnitt gebildet ist. Mittig ist in den Boden der zylindrischen Eisenkung eine - nicht dargestellte - Sackbohrung eingebracht. Zumindest der Boden der zylindrischen Einsenkung ist ferromagnetisch ausgebildet oder mit einer ferromagnetischen Schicht versehen. An ihrer dem Haltestück 5 zugewandten Seite ist an den beiden Säulenteilen 3 gegenüberliegend eine Justierhilfe 31 angeordnet. In Ausführungsbeispiel ist die Justierhilfe 31 in Form einer erhabenen Linie ausgebildet. Selbstverständlich kann die Justierhilfe 31 auch aufgedruckt oder in einer sonstigen geeigneten Form, beispielsweise in Art eines Pfeils ausgebildet sein. Die Justierhilfe 31 dient der Positionierung der Säulenteile 3 in Bezug auf die Befestigungsplatte 6, die hierzu ebenfalls mit einer Justierhilfe 63 versehen ist.

Im Ausführungsbeispiel sind der Haltesteg 2 und die beiden Säulenteile 3 als einstückiges Kunststoffspritzgussteil ausgebildet. Alternativ können der Haltesteg 2 und die beiden Säulenteile 3 auch als einstückiges Metallgussteil ausgebildet sein.

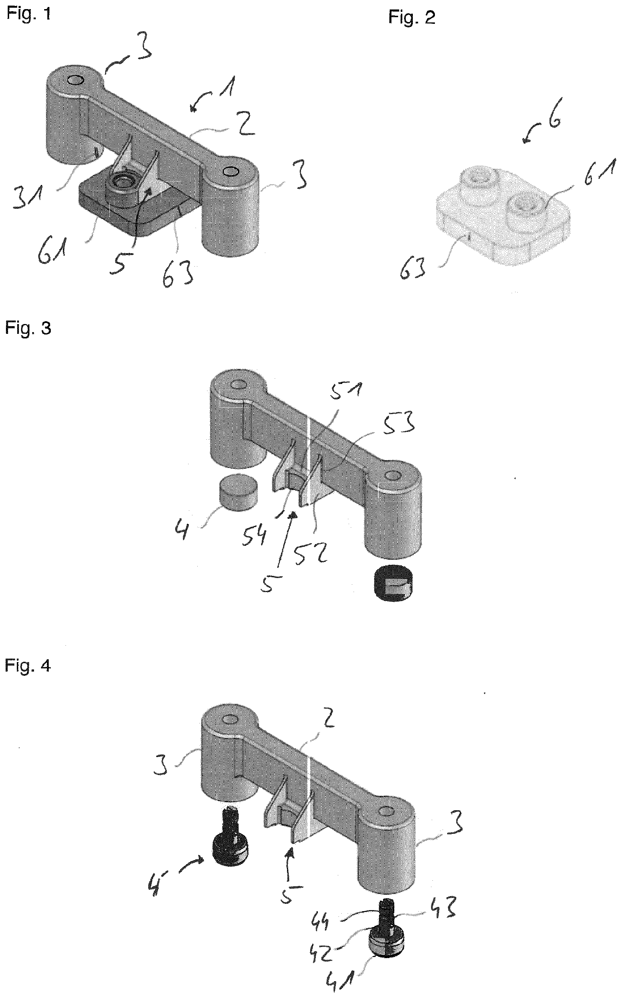

Der Fixiereinsatz 4 ist im Ausführungsbeispiel gemäß Figur 3 in Form eines zylindrischen Magneten ausgebildet, dessen Abmessungen, das heißt Höhe und Durchmesser, im Wesentlichen den Abmessungen der zylindrischen Einsenkung der Aufnahme der Säulenteile 3 entsprechen. Zur Bestückung der beiden Säulenteile 3 mit einem so ausgebildeten Fixiereinsatz 4 wird dieser einfach in die zylindrische Einsenkung eingesetzt, wo er magnetisch an dem ferromagnetischen Boden der Einsenkung gehalten ist.

Im Ausführungsbeispiel gemäß Figur 4 weist der Fixiereinsatz 4' ein Kopfstück 41 auf, an dem einstückig ein Klemmstift 42 angeformt ist. Das Kopfstück 41 ist in diesem Ausführungsbeispiel an seiner dem Klemmstift 2 gegenüberliegenden Oberseite mit einem doppelseitigen Klebeband versehen. Der Klemmstift 42 ist an seinem freien Ende mit einem axialen Schlitz 43 versehen, wodurch zwei elastische Klemmbacken 44 gebildet sind. Der Außendurchmesser des Klemmstifts 42 ist geringfügig größer als der Innendurchmesser der Sackbohrung der Aufnahme für den Fixiereinsatz 4. Der Klemmstift 42 kann so klemmend in die Sackbohrung eingebracht werden, bis das Kopfstück an dem Boden der Einsenkung anliegt. Der Fixiereinsatz 4' ist so lösbar in der Aufnahme gehalten.

In einer weiteren Ausführungsform kann die Sackbohrung auch als Gewindesackbohrung ausgeführt sein, wobei an dem Kopfstück einstückig ein Gewindestift angeformt ist, der in die Gewindesackbohrung einschraubbar ist.

In Figur 2 ist eine 6 zur Befestigung einer gemäß DIN 3015-1:1999-01 ausgebildeten Rohrschelle 8 dargestellt. Die Befestigungsplatte 6 ist im Wesentlichen als quaderförmige Platte mit abgerundeten Ecken ausgeführt. Auf ihrer der Unterlage 7 abgewandten Oberseite sind auf der Längsmittelachse der Befestigungsplatte 6 beabstandet zueinander zwei zylinderförmige Innengewindesockel 61 angeordnet.

Das Haltestück 5 besteht im Wesentlichen aus einem im Wesentlichen quaderförmig ausgebildeten Halteblock 51, an dessen Längseitenwänden diese überragend zwei parallel zueinander angeordnete Seitenbleche 52 angebracht sind. (Unter der Bezeichnung "Blech" ist vorliegend ein dünner plattenförmiger Körper zu verstehen, d.h. ein plattenförmiger Körper, dessen Dicke gegenüber seinen Flächenabmessungen gering ist. Die Bezeichnung enthält vorliegend keine Beschränkung hinsichtlich eines Werkstoffs.) Mittig ist in die Seitenbleche 52 jeweils zueinander fluchtend eine rechteckige Ausnehmung 53 eingebracht, die bis zu dem Halteblock 51 geführt ist und deren Breite geringfügig geringer gewählt ist, als die Breite des Haltesteges 2. Die Querseitenwände des Halteblocks 51 sind jeweils nach innen gewölbt ausgebildet, wodurch jeweils eine Anlagefläche 54 gebildet ist, deren Innenkontur im Wesentlichen der Außenkontur der Innengewindesockel 61 der Befestigungsplatte 6 entsprechen, die an diesen anliegen.

Das Haltestück 5 ist auf den Haltesteg 2 der Haltebrücke 1 mittig klemmend aufgeschoben, wobei der Haltesteg 2 die Ausnehmungen 53 der Seitenbleche 52 ausfüllt. Das Haltestück 5 ist so lösbar mit dem Haltesteg 2 verbunden. Im Ausführungsbeispiele ist das Haltestück als Kunststoffspritzgussteil ausgebildet.

In einer weiteren Ausführungsform kann das Haltestück 5 auch nicht lösbar mit dem Haltesteg verbunden sein. Es kann weiterhin auch einstückig mit dem Haltesteg ausgebildet sein.

Zur klebenden Befestigung der Befestigungsplatte 6 auf einer Unterlage 7 wird die Befestigungsplatte auf ihrer auf der Unterlage 7 aufzuklebenden Unterseite mit einem Kleber 62, vorzugsweise einem Zwei-Komponenten-Kleber versehen. Sodann wird die Befestigungsplatte 6 auf die Unterlage 7 positioniert und dir Haltebrücke wird über die Fixiereinsätze 4 mit ihren Säulenteilen 3 derart auf der Unterlage 7 befestigt, dass der Haltesteg 2 über der Oberseite der Befestigungsplatte 6 verläuft und das Haltestück 5 zwischen den Innengewindesockeln 61 der Befestigungsplatte 6 positioniert ist. Die Innengewindesockel 61 liegen dabei an den Anlageflächen 54 des Halteblocks 51 an. Hierbei wird die Befestigungsplatte 6 gegen die Unterlage 7 gedrückt, wobei zwischen der Befestigungsplatte 6 und der Unterlage 7 befindlicher überschüssiger Kleber 62 seitlich verdrängt wird. Dieser kann nachfolgend einfach entfernt werden. Die befestigungsplatte ist so in ihrer Position sicher fixiert, während der Kleber 62 aushärtet. Nachfolgend kann die Haltebrücke 1 entfernt werden und an der Befestigungsplatte 6 kann einer Rohrschelle 8 befestigt werden.

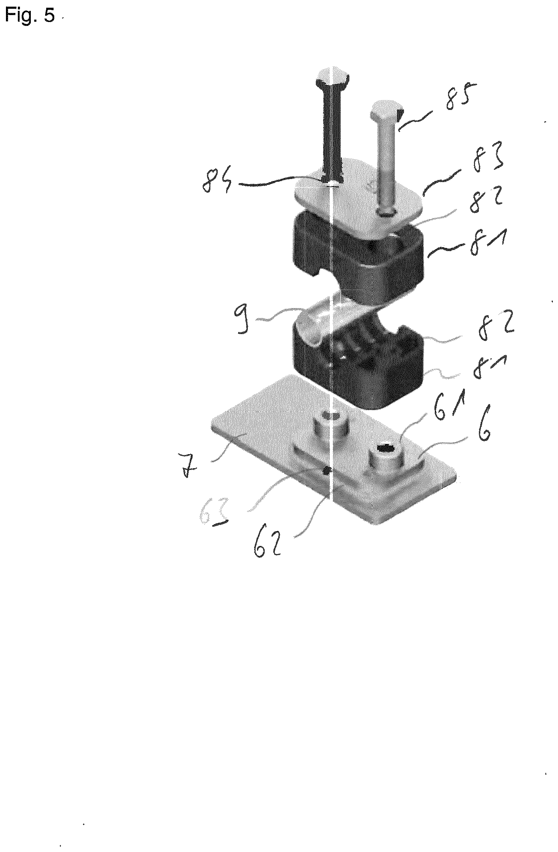

In Figur 5 ist eine mit der erfindungsgemäßen Vorrichtung auf eine Unterlage 7 aufgeklebte Befestigungsplatte 6 mit einer auf dieser mittels Schrauben 83 zu befestigenden Rohrschelle 8 gezeigt. Die Rohrschelle 8 ist aus zwei Schellenhälfte 81 gebildet, die zueinander fluchtenden zylindrische Duchführungen 82 zur Durchführung von Schrauben 85 aufweisen. Der Innendurchmesser der Durchführungen 82 entspricht im Wesentlichen dem Außendurchmesser der Innengewindesockel 61 der Befestigungsplatte 6, auf welche die untere Schellenhälfte 81 aufgesteckt wird. Auf der oberen Schellenhälfte 81 liegt eine Druckplatte 83 auf, die mit Bohrungen 84 versehen ist, die mit den Durchführungen 82 der Rohrschelle 8 fluchten. Zwischen die Schellenhälften 81 wird eine zu fixierende Leitung 9 eingelegt. Anschließend werden zwei Schrauben 85 durch die Bohrungen 84 der Druckplatte und die Durchführungen 82 der Schellenhälften 81 geführt und in die Innengewindesockel 61 der Befestigungsplatte eingeschraubt.

Die Erfindungsgemäße Vorrichtung ist nicht auf die klebende Befestigung einer Befestigungsplatte für Rohrschellen einer Unterlage beschränkt. So können mit der erfindungsgemäßen Vorrichtung auch Befestigungsplatten fixiert werden, die nachfolgend mittels Schweißen oder auch durch Verschrauben an einer Unterlage befestigt werden.

## Patentansprüche

1. Vorrichtung zur Fixierung einer Befestigungsplatte (6) für Rohrschellen für die klebende Befestigung auf einer Unterlage (7), mit einer Haltebrücke (1), die einen Haltesteg (2) umfasst, der mit zwei beabstandet zueinander angeordneten Säulenteilen (3) versehen ist, die in einer Richtung in einem gleichen Abstand über den Haltesteg hervorragen, wobei die Säulenteile (3) an ihrem über den Haltesteg hervorragenden Ende mit einem Fixiermittel zur Befestigung an der Unterlage (7) versehen sind, wobei der Haltesteg (2) an seiner den hervorragenden Enden der Säulenteile (3) zugewandten Unterseite ein Haltestück (5) aufweist, das zur Aufnahme von zwei beabstandet auf der Befestigungsplatte (6) angeordneten Innengewindesockeln (61) ausgebildet ist, wobei das Haltestück (5) zwei gegenüberliegende, entgegengerichtet gewölbte Anlageflächen (54) zur Anlage jeweils eines Innengewindesockels (61) der Befestigungsplatte (6) aufweist.

2. Vorrichtung nach Anspruch 1, **dadurch gekennzeichnet, dass** das Fixiermittel durch ein Klebepad gebildet ist.

3. Vorrichtung nach Anspruch 2, **dadurch gekennzeichnet, dass** das Klebepad mit einem wiederablösbaren doppelseitigen Klebeband versehen ist.

4. Vorrichtung nach Anspruch 1, **dadurch gekennzeichnet, dass** das Fixiermittel durch einen Magneten gebildet ist.

5. Vorrichtung nach einem der vorgenannten Ansprüche, **dadurch gekennzeichnet, dass** die Säulenteile (3) jeweils eine Aufnahme für einen Fixiereinsatz (4, 4') aufweisen, in die ein Fixiereinsatz (4, 4') eingebracht ist, der mit dem jeweiligen Säulenteil (3) lösbar verbunden ist und der das Fixiermittel aufweist.

6. Vorrichtung nach Anspruch 5, **dadurch gekennzeichnet, dass** die Aufnahme zumindest bereichsweise ferromagnetisch ausgebildet ist, wobei der Fixiereinsatz (4, 4') einen magnetischen Abschnitt aufweist, über den er in der Aufnahme magnetisch gehalten ist.

7. Vorrichtung nach Anspruch 5, **dadurch gekennzeichnet, dass** die Aufnahme eine Bohrung oder eine Gewindebohrung aufweist, wobei der Fixiereinsatz (4, 4') einen Klemmstift (42) bzw. einen Gewindestift aufweist, über den er in der Bohrung bzw. der Gewindebohrung lösbar befestigt ist.

8. Vorrichtung nach einem der vorgenannten Ansprüche, **dadurch gekennzeichnet, dass** das Haltestück (5) zur Aufnahme des wenigstens einen Innengewindesockels (61) lösbar mit dem Haltesteg (2) verbunden ist.

9. Befestigungsset, umfassend eine Befestigungsplatte (6), einen Kleber sowie eine Vorrichtung nach einem der vorgenannten Ansprüche, wobei die Befestigungsplatte (6) auf der der Unterlage (7) abgewandten Oberseite zwei beabstandet zueinander angeordnete Innengewindesockel (61) aufweist und wobei die Vorrichtung das Haltestück (5) zur Aufnahme der beiden Innengewindesockel (61) der Befestigungsplatte (6) aufweist, wobei der Kleber vorzugsweise mit kugelförmigen Partikeln versehen ist.

10. Befestigungsset nach Anspruch 9, **dadurch gekennzeichnet, dass** wenigstens eines der Säulenteile (3), bevorzugt beide Säulenteile (3) mit einer Justierhilfe (31) versehen sind, die mit einer an der Befestigungsplatte (6) angeordneten Justierhilfe (63) korrespondiert, wobei die Justierhilfen (31, 63) vorzugsweise in Form einer Linie oder eines Pfeils ausgebildet sind.

11. Verfahren zur klebenden Befestigung einer Befestigungsplatte (6) für Rohrschellen auf einer Unterlage (7) mit einer Vorrichtung nach einem der Ansprüche 2 bis 8, wobei die Befestigungsplatte (6) auf ihrer auf der Unterlage (7) aufzuklebenden Unterseite mit einem Kleber, vorzugsweise einem Zwei-Komponenten-Kleber versehen wird, nachfolgend die Befestigungsplatte (6) auf die Unterlage (7) aufgebracht wird und sodann die Vorrichtung derart mit ihren Säulenteilen (3) auf der Unterlage (7) befestigt wird, dass der Haltesteg (2) über der Oberseite der Befestigungsplatte (6) verläuft, wodurch diese gegen die Unterlage (7) gedrückt wird.

12. Verfahren nach Anspruch 11, **dadurch gekennzeichnet, dass** die Befestigungsplatte (6) auf ihrer Oberseite zwei beabstandet zueinander angeordnete Innengewindesockel (61) aufweist und der Haltesteg (2) das Haltestück (5) zur Aufnahme der beiden Innengewindesockel (61) der Befestigungsplatte (6) aufweist, wobei das Haltestück (5) zwischen den beiden Gewindesockeln (61) der Befestigungsplatte (6) positioniert wird, sodass es mit jeweils wenigstens einer der Anlageflächen (54) an den beiden Innengewindesockeln (61) anliegt.

## Claims

1. Device for fixing a fixing plate (6) for pipe clamps for adhesive fastening to a base (7), with a holding bridge (1) that comprises a holding bar (2) that is provided with two column parts (3) that are arranged at a distance from each other and that protrude beyond the holding bar in one direction at a same distance, where the column parts (3) are provided with a fixing means for fastening to the base (7) on their end that protrudes beyond the holding bar, where the holding bar (2) has a holding piece (5) on its bottom side that faces the protruding ends of the column parts (3), with the holding piece being formed to take up two female-threaded sockets (61) that are arranged on the fixing plate (6) at a distance, where the holding piece (5) has two facing contact surfaces (54) curved in opposite directions for contact with one female-threaded socket (61) of the fixing plate (6) each.

2. Device according to claim 1, **characterised in that** the fixing means is formed by an adhesive pad.

3. Device according to claim 2, **characterised in that** the adhesive pad is provided with a double-sided adhesive tape that can be removed again.

4. Device according to claim 1, **characterised in that** the fixing means is formed by a magnet.

5. Device in accordance with one of the preceding claims, **characterised in that** the column parts (3) each have a receptacle for a fixing insert (4, 4') into which a fixing insert (4, 4') is introduced that is removably connected to the respective column part (3) and that has the fixing means.

6. Device according to claim 5, **characterised in that** the receptacle is formed ferro-magnetically at least in an area, where the fixing insert (4, 4') has a magnetic section through which it is magnetically held in the receptacle.

7. Device according to claim 5, **characterised in that** the receptacle has a bore or a threaded bore, where the fixing insert (4, 4') has a clamping pin (42) or a threaded pin by which it is removably fastened in the bore or the threaded bore.

8. Device in accordance with one of the preceding claims, **characterised in that** the holding piece (5) for taking up the at least one female-threaded socket (61) is removably connected to the holding bar (2).

9. Fastening set, comprising a fixing plate (6), a glue, and a device according to one of the preceding claims, where the fixing plate (6) has two female-threaded sockets (61) arranged at a distance from each other on the upper side that faces away from the base (7), and where the device has the holding piece (5) for taking up the two female-threaded sockets (61) of the fixing plate (6), where the glue is preferably provided with spherical particles.

10. Fastening set according to claim 9, **characterised in that** at least one of the column parts (3) is, and that preferably both column parts (3) are, provided with an adjustment aid (31) that corresponds to an adjustment aid (63) that is arranged on the fixing plate (6), where the adjustment aids (31, 63) are preferably formed in the shape of a line or an arrow.

11. Procedure for adhesive fastening of a fixing plate (6) for pipe clamps on a base (7) with a device according to one of claims 2 to 8, where the fixing plate (6) is provided with a glue, preferably a two-component glue, on its bottom side that is to be glued to the base (7), the fixing plate (6) is subsequently applied to the base (7) and the device is then fastened with its column parts (3) on the base (7) so that the holding bar (2) runs above the upper side of the fixing plate (6), which presses it against the base (7).

12. Method in accordance with claim 11, **characterised in that** the fixing plate (6) has two female-threaded sockets (61) arranged at a distance from each other on its upper side and the holding bar (2) has the holding piece (5) for taking up the two female-threaded sockets (61) of the fixing plate (6), where the holding piece (5) is positioned between the two threaded sockets (61) of the fixing plate (6) so that it rests against the two female-threaded sockets (61) with at least one of its contact surfaces (54).

## Revendications

1. Dispositif de fixation adhésive d'une plaque de fixation (6) pour colliers sur un support (7), avec un pont de maintien (1) comprenant une bride de maintien (2) dotée de deux éléments de colonnes (3) disposés à distance l'un de l'autre qui dépassent de la bride de maintien dans une direction à distance égale, sachant que l'extrémité des éléments de colonnes (3) qui dépasse de la bride de maintien est dotée d'un agent de fixation sur le support (7), sachant que la bride de maintien (2) présente sur sa face inférieure tournée vers les extrémités des éléments de colonnes (3) qui dépassent une pièce de retenue (5) réalisée pour loger deux socles à filetage intérieur (61) disposés à distance l'un de l'autre sur la plaque de fixation (6), sachant que la pièce de retenue (5) présente deux surfaces de contact (54) opposées bombées en sens inverse contre lesquelles un socle à filetage intérieur (61) de la plaque de fixation (6) est respectivement placé.

2. Dispositif selon la revendication 1, **caractérisé en ce que** l'agent de fixation est formé par une surface adhésive.

3. Dispositif selon la revendication 2, **caractérisé en ce que** la surface adhésive est dotée d'un ruban adhésif double face amovible.

4. Dispositif selon la revendication 1, **caractérisé en ce que** l'agent de fixation est formé par un aimant.

5. Dispositif selon l'une des revendications précédentes, **caractérisé en ce que** les éléments de colonnes (3) présentent respectivement un logement pour un insert de fixation (4, 4') dans lequel un insert de fixation (4, 4') relié de manière amovible à l'élément de colonne respectif (3) et présentant l'agent de fixation est inséré.

6. Dispositif selon la revendication 5, **caractérisé en ce que** le logement est ferromagnétique au moins par endroits, sachant que l'insert de fixation (4, 4') présente une section magnétique par le biais de laquelle il est maintenu par magnétisme dans le logement.

7. Dispositif selon la revendication 5, **caractérisé en ce que** le logement présente un orifice ou un orifice fileté, sachant que l'insert de fixation (4, 4') présente une broche de serrage (42) ou une tige filetée par le biais de laquelle il est fixé de manière amovible dans l'orifice ou l'orifice fileté.

8. Dispositif selon l'une des revendications précédentes, **caractérisé en ce que** la pièce de retenue (5) destinée à loger ledit au moins un socle à filetage intérieur (61) est reliée de manière amovible à la bride de maintien (2).

9. Kit de fixation comprenant une plaque de fixation (6), un adhésif ainsi qu'un dispositif selon l'une quelconque des revendications précédentes, sachant que la plaque de fixation (6) présente deux socles à filetage intérieur (61) disposés à distance l'un de l'autre sur la face supérieure opposée au support (7) et sachant que le dispositif présente la pièce de retenue (5) destinée à loger les deux socles à filetage intérieur (61) de la plaque de fixation (6), l'adhésif étant de préférence doté de particules sphériques.

10. Kit de fixation selon la revendication 9, **caractérisé en ce qu'**au moins un des éléments de colonnes (3), de préférence les deux éléments de colonnes (3), est/sont doté(s) d'un repère de réglage (31) qui correspond à un repère de réglage (63) disposé sur la plaque de fixation (6), sachant que les repères de réglage (31, 63) sont de préférence réalisés sous la forme d'une ligne ou d'une flèche.

11. Procédé de fixation adhésive d'une plaque de fixation (6) pour colliers sur un support (7) avec un dispositif selon l'une quelconque des revendications 2 à 8, sachant que la plaque de fixation (6) est dotée d'une colle, de préférence à deux composants, sur sa face inférieure à coller sur le support (7), la plaque de fixation (6) étant ensuite placée sur le support (7), puis le dispositif étant fixé avec ses éléments de colonnes (3) sur le support (7) de telle manière que la bride de maintien (2) se trouve au-dessus de la face supérieure de la plaque de fixation (6), suite à quoi cette dernière est pressée contre le support (7).

12. Procédé selon la revendication 11, **caractérisé en ce que** la plaque de fixation (6) présente sur sa face supérieure deux socles à filetage intérieur (61) disposés à distance l'un de l'autre et que la bride de maintien (2) présente la pièce de retenue (5) destinée à loger les deux socles à filetage intérieur (61) de la plaque de fixation (6), sachant que la pièce de retenue (5) est positionnée entre les deux socles filetés (61) de la plaque de fixation (6) de manière à être respectivement en contact avec au moins une des surfaces de contact (54) des deux socles à filetage intérieur (61).
